# EUROPÄISCHE PATENTSCHRIFT

(11) **EP 0 889 802 B1**
(45) Veröffentlichungstag und Bekanntmachung des Hinweises auf die Patenterteilung: **17.10.2001**
(21) Anmeldenummer: 98906898.6
(22) Anmeldetag: 29.01.1998
(51) Int. Cl.: B60Q 1/30

(54) **KRAFTFAHRZEUG MIT EINER ZUSÄTZLICHEN SIGNALLEUCHTE**
VEHICLE WITH AN ADDITIONAL SIGNAL LIGHT
VEHICULE A FEU DE SIGNALISATION SUPPLEMENTAIRE

(30) Priorität: 29.01.1997 DE 29701438 U
(43) Veröffentlichungstag der Anmeldung: 13.01.1999
(73) Patentinhaber: Hagmeier, Georg, 73340 Schalkstetten (DE)
(72) Erfinder: HAGMEIER, Georg, D-73340 Schalkstetten (DE); WITTLINGER, Udo, D-73321 Geislingen (DE)
(74) Vertreter: Raible, Hans, Dipl.-Ing.
(86) Internationale Anmeldenummer: EP9800471
(87) Internationale Veröffentlichungsnummer: WO9832633

(56) Entgegenhaltungen:
- WO-A-97/27078
- US-A- 5 119 067
- US-A- 5 237 306

## Beschreibung

Die Erfindung betrifft ein Kraftfahrzeug mit einer zusätzlichen Signalleuchte, insbesondere einer hochgesetzten Heckleuchte.

Hochgesetzte Heckleuchten sind bekannt aus der DE-A1-3 133 307.

Auch kennt man aus der US-A-5 119 067 ein Fahrzeug mit einer hochgesetzten Heckleuchte. Dieses Fahrzeug hat eine Fotozelle, und solange diese bei Nacht von einem anderen Fahrzeug mit Fernlicht einer vorgegebenen Intensität bestrahlt wird, blinkt diese zusätzliche Heckleuchte mit erhöhter Frequenz und mit grünem oder blauem Licht, um das andere Fahrzeug zum Umschalten auf Abblendlicht zu veranlassen. Zusätzlich zur hochgesetzten Blinkleuchte können hierbei auch noch grüne oder blaue Signalleuchten blinken, welche in die Gehäuse der beiden Rücklichter integriert sind.

Aufgabe der Erfindung ist es, ein neues Kraftfahrzeug mit verbesserten Sicherheitsmerkmalen bereitzustellen.

Nach der Erfindung wird diese Aufgabe gelöst durch ein Kraftfahrzeug mit einer zusätzlichen Signalleuchte, insbesondere einer hochgesetzten Heckleuchte, mit einer Vorrichtung zum Betreiben dieser zusätzlichen Signalleuchte mit der Frequenz eines Warnblinkgebers, wenn ein Warnblinkvorgang ausgelöst ist, und mit einer vorrangigen Vorrichtung zum Umschalten dieser zusätzlichen Signalleuchte auf Betrieb mit einem anderen Steuersignal, wenn ein solches anderes Steuersignal von einem hierfür am Kraftfahrzeug vorgesehenen Geber erzeugt wird, welcher durch Überschreiten einer vorgegebenen Verzögerung des Kraftfahrzeugs automatisch aktivierbar ist. Dadurch, dass die zusätzliche Signalleuchtebei Überschreiten einer vorgegebenen Verzögerung des Kraftfahrzeugs automatisch von einem hierfür am Kraftfahrzeug vorgesehenen Geber mit einem anderen Steuersignal aktiviert wird, wird die Aufmerksamkeit des nachfolgenden oder auch entgegenkommenden Verkehrs sehr stark erhöht, und dies verringert oder verhindert bei einem Unfall anschließende Auffahrunfälle infolge Unachtsamkeit.

Eine bevorzugte Weiterbildung der Erfindung ist Gegenstand des Anspruchs 2. Da bei einem Warnblinkvorgang die zusätzliche Signalleuchte durch die dabei auftretende konjunktive logische Verknüpfung aktiviert wird, nicht aber beim Blinken zur Anzeige der Fahrtrichtung, wird das Signalbild verbessert und der nachfolgende Verkehr wird schneller gewarnt, so dass Auffahrunfälle vermieden werden können.

In bevorzugter Weise ist die Frequenz des anderen Steuersignals von der Frequenz des Warnblinkgebers verschieden, und in besonders bevorzugter Weise höher als diese. Da nämlich das Überschreiten einer vorgegebenen Verzögerung des Kraftfahrzeugs regelmäßig eine besondere Gefahrensituation indiziert, ist es von großem Vorteil, durch ein besonders auffälliges Signal auf diese außergewöhnliche Gefahrensituation hinzuweisen und den herannahenden Verkehr zu besonderer Vorsicht zu veranlassen. Dadurch kann eine Gefahren- bzw. Notsituation klar von einer Pannensituation unterschieden werden.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, und den Unteransprüchen. Es zeigt:
- Fig. 1: ein Übersichtsschaltbild einer ersten Ausführungsform einer erfindungsgemäßen Anordnung,
- Fig. 2: eine Übersichtsdarstellung zur Erläuterung der Erfindung, und
- Fig. 3: ein zweites Ausführungsbeispiel einer erfindungsgemäßen Anordnung,
- Fig. 4: ein drittes Ausführungsbeispiel einer erfindungsgemäßen Anordnung, und
- Fig. 5: ein viertes Ausführungsbeispiel einer erfindungsgemäßen Anordnung.

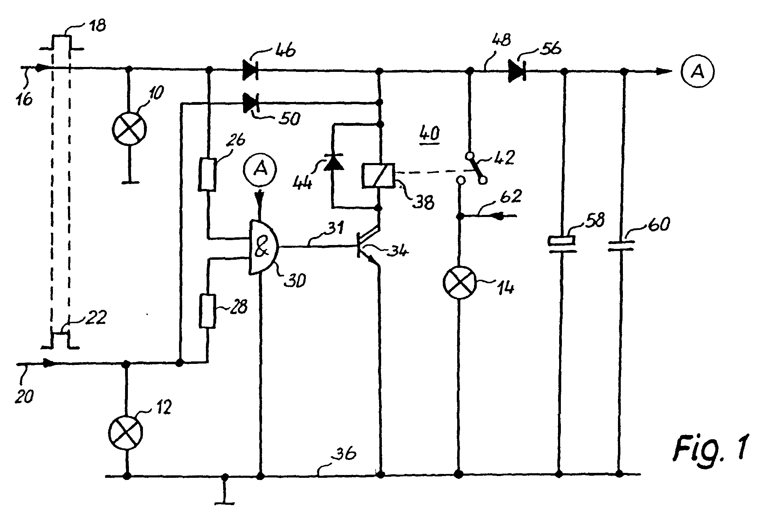

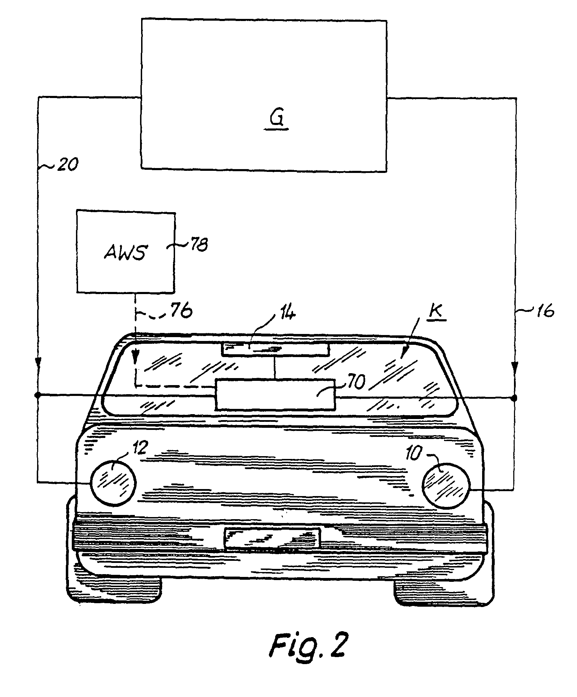

Fig. 1 zeigt eine rechte Blinkleuchte 10 und eine linke Blinkleuchte 12 eines Kraftfahrzeugs K (Fig. 2), ferner eine zusätzliche Signalleuchte 14 in Form einer Heckwarnblinkleuchte, die typisch am Rückfenster des Fahrzeugs angeordnet ist, aber naturgemäß auch an einer anderen geeigneten Stelle angeordnet sein kann.

Die rechte Blinkleuchte 10 erhält von einem Geber G (Fig. 2) über eine Leitung 16 Strom in Form von Stromimpulsen 18, z.B. wenn das Fahrzeug nach rechts fährt und der Fahrer das anzeigen will.

Ebenso erhält die linke Blinkleuchte 12 vom Geber G (Fig. 2) über eine Leitung 20 Strom in Form von Stromimpulsen 22, z.B. beim Betätigen des Blinkers nach links.

In keinem dieser beiden Fälle darf die zusätzliche Signalleuchte 14 betätigt werden, die sich gewöhnlich in der Mitte des Fahrzeugs befindet, da dies den nachfolgenden Verkehr verwirren würde und deshalb unzulässig ist.

Bei einem Warnblinkvorgang kommen sowohl auf der Leitung 16 wie auf der Leitung 20 synchrone Impulse 18, 22 von einem Warnblinkgeber (in G) an, und nur in diesem Fall soll auch die zusätzliche Signalleuchte 14 betätigt werden, um Lichtsignale abzugeben und eine zusätzliche Warnung für den nachfolgenden Verkehr bereitzustellen.

Hierzu sind über je einen Widerstand 26, 28 die beiden Eingänge eines UND-Glieds 30 mit den Leitungen 16 bzw. 20 verbunden, so daß dieses UND-Glied 30 bei gleichzeitigem Auftreten der Impulssignale 18, 22 ein Ausgangssignal an seinem Ausgang 31 abgibt, welches der Basis eines npn-Transistors 34 zugeführt wird, dessen Emitter mit der Masse 36 des Fahrzeugs verbunden ist. Er ist in Reihe geschaltet mit der Spule 38 eines Relais 40, dessen Umschaltkontakt 42 im stromlosen Zustand dargestellt ist. Parallel zur Spule 38 ist eine Freilaufdiode 44 geschaltet.

Von der Leitung 16 führt eine Diode 46 zu einer Leitung 48; ebenso führt eine Diode 50 von der Leitung 20 zur Leitung 48. Beim Auftreten von Impulsen 18 oder 22, oder gleichzeitigem Auftreten solcher Impulse, erhält also die Leitung 48 ein entsprechendes Potential, d.h. wenn die Impulse 18, 22 positiv sind, wird auch die Leitung 48 positiv. Die Spule 38 des Relais 40 liegt zwischen dieser Leitung 48 und dem Kollektor des Transistors 34. Ebenso ist die Reihenschaltung des Kontakts 42 und der dritten Leuchte 14 zwischen dieser Leitung 48 und Masse 36 angeschlossen.

Über eine Diode 56 ist die Parallelschaltung zweier Kondensatoren 58, 60 an die Leitung 48 angeschlossen, d.h. wenn positive Impulse 18 und/oder 22 anstehen, werden diese Kondensatoren entsprechend aufgeladen. Ihre negativen Anschlüsse sind mit Masse verbunden. Die Spannung an diesen Kondensatoren 58, 60 wird über eine Verbindung A dem positiven Anschluß des UND-Glieds 30 zugeführt, dessen negativer Anschluß in der dargestellten Weise mit Masse verbunden ist. Auf diese Weise wird, sobald einige Impulse 18 oder 22 aufgetreten sind, das UND-Glied 30 in einem betriebsbereiten Zustand gehalten. Zweckmäßig kann hierzu der Kondensator 58 z.B. eine Kapazität von 1000 µF haben.

### Arbeitsweise von Fig. 1

Wenn nur Impulse 18 oder nur Impulse 22 auftreten, spricht das UND-Glied 30 nicht an, und die zusätzliche Signalleuchte 14 blinkt deshalb nicht.

Wenn die Impulse 18 und 22 synchron auftreten, also bei einem Warnblinkvorgang, spricht das UND-Glied 30 an und erzeugt an seinem Ausgang 31 entsprechende Impulse, die den Transistor 34 einschalten, so daß das Relais 40 über die Dioden 46, 50 Strom von den Leitungen 16, 20 erhält und den Kontakt 42 umschaltet. Dadurch erhält die zusätzliche Signalleuchte 14 einen impulsförmigen Strom und blinkt synchron mit den Leuchten 10 und 12.

Über eine Verbindung 62 kann der zusätzlichen Signalleuchte 14 ebenfalls Strom zugeführt werden, um andere optische Signale mit ihr zu erzeugen. Dies wird nachfolgend erläutert.

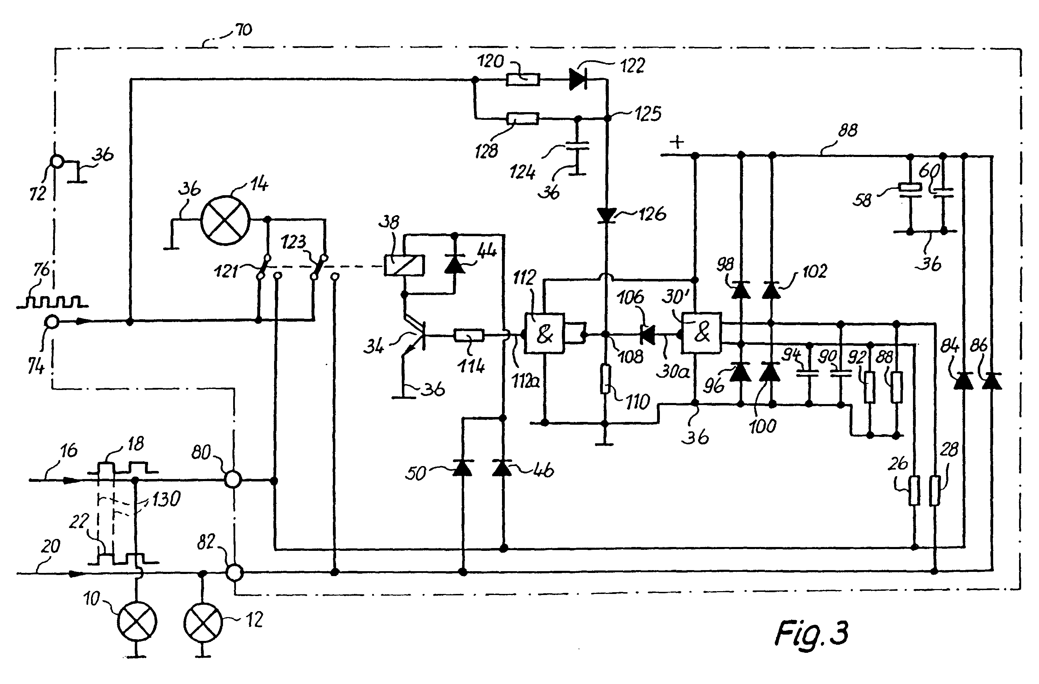

**Fig. 3** zeigt ein zweites Ausführungsbeispiel der Erfindung. Gleiche oder gleichwirkende Teile wie in den vorhergehenden Figuren werden gewöhnlich mit denselben Bezugszeichen bezeichnet wie dort und deshalb nicht nochmals beschrieben.

Fig. 3 zeigt das Gerät, das in Fig. 2 mit 70 bezeichnet ist und das zweckmäßig mit der zusätzlichen Signalleuchte 14 in einem Gehäuse kombiniert ist. Das Gerät 70 hat einen Anschluß 72 für Masse, einen Anschluß 74 für ein Signal 76 von einem Geber 78 (Fig. 2), ferner einen Anschluß 80 für eine Verbindung mit der Leitung 16, und einen Anschluß 82 für eine Verbindung mit der Leitung 20.

Vom Anschluß 80 führt eine Diode 84 und vom Anschluß 82 eine Diode 86 zu einer positiven Versorgungsleitung 88, wobei die Spannung an dieser Leitung durch die bereits beschriebenen Kondensatoren 58 und 60 geglättet wird

Ebenso führt vom Eingang 80 ein Widerstand 26 zu einem ersten Eingang und vom Eingang 82 ein Widerstand 28 zu einem zweiten Eingang eines NAND-Glieds 30', das in seiner konjunktiven Funktion dem UND-Glied 30 der Fig. 1 entspricht. Um Fehlschaltungen durch Störimpulse auf den Leitungen 16 und 20 zu vermeiden, sind die Eingänge des Glieds 30' in der dargestellten Weise über RC-Kombinationen 88, 90 bzw. 92, 94 mit Masse 36 verbunden. Außerdem sind vier Dioden 96, 98, 100, 102 in der dargestellten Weise angeordnet, um die Spannungen am Eingang des NAND-Glieds 30' auf niedrige Werte zu begrenzen.

Über eine Diode 106 ist der Ausgang 30a des NAND-Glieds 30' mit einem Knotenpunkt 108 verbunden, der im Normalfall, d.h. dann, wenn die Lampe 14 kein Signal erzeugen soll, ein hohes Potential hat. Über einen Widerstand 110 ist dieser Knotenpunkt 108 mit Masse 36 verbunden. Ferner ist er mit dem Eingang eines Invertierers 112 verbunden, dessen Ausgang 112a über einen Widerstand 114 mit der Basis des npn-Transistors 34 verbunden ist, der bereits bei Fig. 1 beschrieben wurde. Wenn der Knotenpunkt 108 ein hohes Potential hat, erhält man am Ausgang des Invertierers 112 ein niedriges Potential, und deshalb ist in diesem Fall der Transistor 34 gesperrt und das Relais 38 erhält keinen Strom. Das Relais 38 hat zwei Umschaltkontakte 121, 123, die für den stromlosen Zustand des Relais 38 dargestellt sind; in diesem Fall verbinden die Kontakte 121, 123 den Eingang der Leuchte 14 mit dem Anschluß 74, so daß Impulse 76 von einem Geber 78 der zusätzlichen Signalleuchte 14 zugeführt werden und diese im Rhythmus der Impulse 76 aufleuchten lassen.

Die Impulse 76 werden auch über einen Widerstand 120 und eine Diode 122 einem Kondensator 124 zugeführt und laden diesen auf, wodurch an seiner positiven Elektrode 125 ein positives Potential entsteht, das über eine Diode 126 dem Knotenpunkt 108 zugeführt wird und diesen positiv hält. Zur Entladung des Kondensators 124 dann, wenn keine Impulse 76 zugeführt werden, ist ein hochohmiger Widerstand 128 vorgesehen, so daß in diesem Fall der Kondensator 124 entladen wird, seine positive Elektrode 125 ein niedriges Potential erhält, und folglich das Potential am Knotenpunkt 108 nicht mehr beeinflussen kann. Auf diese Weise erreicht man, daß bei Vorhandensein der Impulse 76 das Relais 38 nicht umschalten kann und die Impulse 76 direkt der zusätzlichen Signalleuchte 14 zugeführt werden, weil der Knotenpunkt 108 auf einem positiven Potential gehalten wird.

Wenn auf den Leitungen 16 und 20 synchrone Impulse 18, 22 vorliegen, was in Fig. 3 durch die gestrichelten Linien 130 angedeutet ist, spricht das NAND-Glied 30' an, so daß sein zuvor hoher Ausgang 30a ein niedriges Potential erhält und folglich auch das Potential des Knotenpunkts 108 niedrig wird, sofern nicht Impulse 76 vorhanden sind, welche in der beschriebenen Weise eine Erhöhung des Potentials des Knotenpunkts 108 und damit eine Sperrung des Transistors 34 bewirken.

Das niedrige Potential des Knotenpunkts 108 wird durch den Invertierer 112 invertiert, so daß an dessen Ausgang 112a ein positives Potential erzeugt wird, das über den Widerstand 114 der Basis des Transistors 34 zugeführt wird und diesen leitend macht. Dadurch erhält das Relais 38 Strom (über die Dioden 50 und 46), so daß die Kontakte 121 und 123 umschalten und die Impulse 18 und 22 über die umgeschalteten Kontakte 121, 123 der zusätzlichen Signalleuchte 14 zugeführt werden, so daß diese im Rhythmus dieser Impulse 18, 22 blinkt und folglich bei einem Warnblinkvorgang, bei dem beide Leuchten 10, 12 synchron blinken, ein drittes synchrones Blinksignal an der zusätzlichen Signalleuchte 14 erzeugen.

Der Invertierer 112 ist im vorliegenden Fall ebenfalls als NAND-Glied ausgebildet, dessen beiden Eingängen gleichzeitig das Potential am Knotenpunkt 108 zugeführt wird. Die beiden NAND-Glieder 30' und 112 erhalten ihre Betriebsspannung von der Versorgungsleitung 88, die z.B. ein Potential von +13,8 V haben kann.

| **Typische Werte der Bauelemente** | |
|---|---|
| Widerstand 120 | 10 kΩ |
| Widerstand 128 | 470 kΩ |
| Kondensator 124 | 1 µF |
| Transistor 34 | BC517 |
| Widerstand 114 | 47 kΩ |
| Widerstände 26, 28 | je 10 kΩ |
| Widerstände 88, 92 | je 100 kΩ |
| Kondensatoren 90,94 | je 100 nF |
| Kondensator 58 | 1000 µF |
| Kondensator 60 | 100 nF |

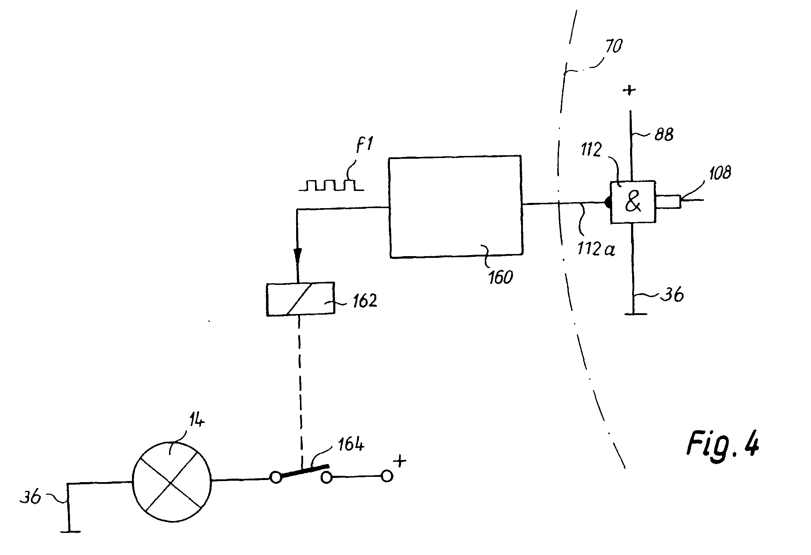

**Fig. 4** zeigt eine weitere Schaltung, die bei einem Warnblinkvorgang durch die Verwendung eines Oszillators 160 die obere Signalleuchte 14 mit einer Frequenz f1 betätigt, welche von der Frequenz f0 der Impulse 18, 22 (Fig. 3) verschieden ist, mit der die Blinkleuchten 10, 12 betätigt werden. Der Unterschied dieser Frequenzen f1 und f0 erzeugt eine größere Aufmerksamkeit und erhöht dadurch die Sicherheit bei einem Unfall.

Der Schaltungsteil rechts vom Invertierer 112 entspricht Fig. 3 und wurde daher nicht nochmals dargestellt. Solange am Ausgang 112a des Invertierers 112 Ausgangssignale auftreten, bewirken diese ein Einschalten des Oszillators 160, und dieser betätigt dann mit seinen Ausgangsimpulsen f1 ein Relais 162, dessen Schalter 164 im Stromkreis der hochgesetzten Leuchte 14 liegt. Dabei ist die Frequenz f1 bevorzugt höher als die Frequenz f0 des Warnblinkgebers, da dann die hochgestellte Leuchte 14 besonders stark auffällt und dadurch Auffahrunfälle besonders sicher verhindert. Statt des Kontakts 164 kann auch hier die Lösung gemäß Fig. 3 mit den beiden Umschaltkontakten 121, 123 mit Vorteil verwendet werden. Zur Vereinfachung der Darstellung ist diese Variante in Fig. 4 nicht dargestellt.

Nach dem Abschalten des Warnblinkgebers erhält der Oszillator 160 kein Eingangssignal mehr, so daß er auch keine Impulse f1 mehr abgibt und folglich die obere Warnleuchte 14 nicht mehr betätigt wird.

Die Erzeugung der Impulse 76 wird bevorzugt durch einen verzögerungsabhängigen Schalter gesteuert, der diese Impulse einschaltet, wenn die Verzögerung des Fahrzeugs K einen vorgegebenen Wert überschreitet. Dieser Wert ist bevorzugt eine Funktion davon, ob das Fahrzeug bergauf oder bergab fährt, d.h. der Wert bei Fahrt in der Ebene ist größer als der Wert bei Fahrt bergauf, aber kleiner als der Wert bei Fahrt bergab.

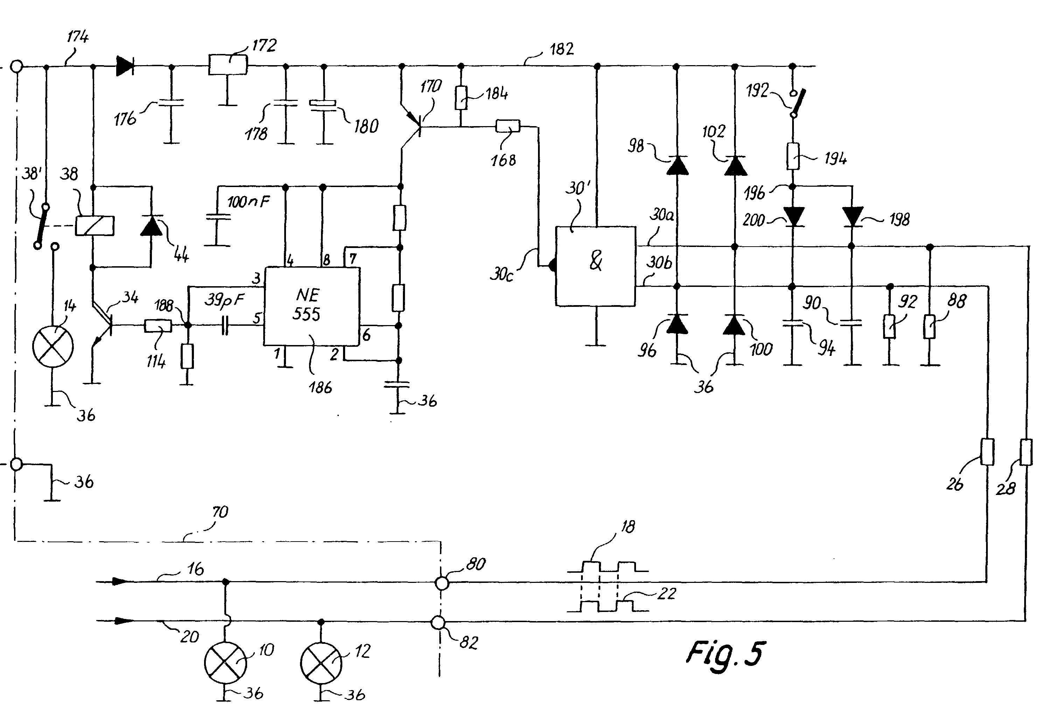

**Fig. 5** zeigt eine Abwandlung zu Fig. 3, und deshalb sind gleiche oder gleichwirkende Teile wie in Fig. 3 mit denselben Bezugszeichen bezeichnet wie dort und werden gewöhnlich nicht nochmals beschrieben.

Das NAND-Glied 30' steuert hier mit seinem Ausgangssignal über einen Widerstand 168 einen pnp-Transistor 170, dem über einen Spannungsregler 172 (z.B. 78L05) eine geregelte Versorgungsspannung, z.B. + 5 V, von einer Plusleitung 174 (z.B. +12 V von der Fahrzeug-batterie) zugeführt wird. Kondensatoren 176 (220 nF), 178 (100 nF) und 180 (47 µF) dienen als Siebglieder. Die geregelte Spannung liegt an einer Leitung 182, an die der Emitter des Transistors 170 angeschlossen ist, ebenso, über einen Widerstand 184, dessen Basis.

Der Transistor 170 steuert, wie dargestellt, die Stromversorgung eines Oszillators 186, hier in Form des IC NE 555, dessen Beschaltung aus Fig. 5 klar hervorgeht. An seinem Ausgang 188 erhält man ein Signal der gewünschten Frequenz, z.B. mit 120 Impulsen pro Minute, und dieses Signal wird über den Widerstand 114 der Basis des npn-Transistors 34 zugeführt, dessen Kollektor über das Relais 38 mit der Plusleitung 174 verbunden ist. Das Relais 38 steuert über seinen Kontakt die hochgesetzte Blinkleuchte 14.

Im Vergleich zu Fig. 3, wo das NAND-Glied 30' über die Stromimpulse 18, 22 von der Warnblinkanlage mit Strom versorgt wird, ist also hier eine direkte Stromversorgung von der Fahrzeugbatterie (über den Anschluß 174) vorgesehen, auch, um eine sichere Stromversorgung des Oszillators 186 und der Leuchte 14 zu gewährleisten.

Ein manuell betätigbarer Kontakt 192 ist auf der einen Seite mit der Leitung 182 und auf der anderen Seite über einen Widerstand 194 mit einem Knotenpunkt 196 verbunden. Von diesem führt eine erste Diode 198 zum oberen Eingang 30a des UND-Glieds 30', und eine zweite Diode 200 zum unteren Eingang 30b des UND-Glieds 30'.

Wird der Kontakt 192 geschlossen, so erhalten über die Dioden 198, 200 beide Eingänge 30a, 30b ein positives ("hohes") Signal, was einem Warnblinksignal entspricht. Das NAND-Glied 30' erzeugt dann an seinem Ausgang 30c ein niedriges Potential, und der Transistor 140 schaltet den Oszillator 186 ein, wodurch die hochgesetzte Warnleuchte 14 mit der Frequenz des Oszillators 186 aus- und eingeschaltet wird, also z.B. 120 mal in der Minute, also mit einer Frequenz f1 von 2 Hz.

Dasselbe geschieht, wenn bei einem Warnblinkvorgang über die Leitungen 16, 20 synchrone Warnblinkimpulse 18, 22 den beiden Eingängen 30a, 30b des Schaltglieds 30' zugeführt werden. Die Kondensatoren 90, 94 bewirken hierbei, daß das Schaltglied 30' ständig aktiviert bleibt, solange diese Impulse 18, 22 zugeführt werden. Auf diese Weise kann die hochgestellte Warnleuchte 14 mit einer Frequenz f1 betrieben werden, die von der Blinkfrequenz f0 der Leuchten 10 und 12 verschieden ist, und die Leuchte 14 kann auch mit Hilfe des Schalters 192 separat eingeschaltet werden. Der Schalter 192 kann z.B. auch ein Schalter sein, der bei einer entsprechenden Verzögerung des Fahrzeugs automatisch betätigt wird, um ein Warnsignal auszulösen.

Naturgemäß sind im Rahmen der vorliegenden Erfindung vielfache Abwandlungen und Modifikationen im Rahmen der Patentansprüche möglich.

## Patentansprüche

1. Kraftfahrzeug mit einer zusätzlichen Signalleuchte (14), insbesondere einer hochgesetzten Heckleuchte,
mit einer Vorrichtung (70) zum Betreiben dieser zusätzlichen Signalleuchte (14) mit der Frequenz eines Warnblinkgebers (G), wenn ein Warnblinkvorgang ausgelöst ist,
und mit einer vorrangigen Vorrichtung zum Umschalten dieser zusätzlichen Signalleuchte (14) auf Betrieb mit einem anderen Steuersignal (76), wenn ein solches anderes Steuersignal (76) von einem hierfür am Kraftfahrzeug vorgesehenen Geber (78) erzeugt wird, welcher durch Überschreiten einer vorgegebenen Verzögerung des Kraftfahrzeugs automatisch aktiviert wird.

2. Kraftfahrzeug nach Anspruch 1, bei welchem die Vorrichtung (70) zum Betreiben der zusätzlichen Signalleuchte (14) zur konjunktiven Verknüpfung von Warnblinksignalen (18, 22) ausgebildet ist, welche den Blinkleuchten (10, 12) beim Auftreten eines Warnblinkvorgangs zugeführt werden, um mit einem durch diese konjunktive Verknüpfung entstehenden Signal die zusätzliche Signalleuchte (14) zu steuern.

3. Kraftfahrzeug nach Anspruch 2, bei welchem zur konjunktiven Verknüpfung von Warnblinksignalen (18, 22) ein NAND-Glied (30') vorgesehen ist, bei welchem das Signal am Ausgang (30a) über ein Invertierglied (112) die zusätzliche Signalleuchte (14) direkt oder indirekt ansteuert.

4. Kraftfahrzeug nach Anspruch 3, bei welchem dem Eingang (108) des Invertierglieds (112) ein Steuersignal von einem Integrierglied (120, 122, 124) zuführbar ist, welchem Integrierglied ein besonderes Steuersignal (76) für die zusätzliche Signalleuchte (14) zuführbar ist, um bei Vorhandensein dieses besonderen Steuersignals (76) eine Steuerung der zusätzlichen Signalleuchte (14) über das Invertierglied (112) zu sperren und eine direkte Steuerung der zusätzlichen Signalleuchte (14) durch das besondere Steuersignal (76) zu ermöglichen.

5. Kraftfahrzeug nach Anspruch 4, bei welchem ein Relais (38) mit Umschaltkontakten (42; 121, 123) vorgesehen ist, welche im stromlosen Zustand eine Steuerung der zusätzlichen Signalleuchte (14) durch das besondere Steuersignal (76) ermöglichen.

6. Kraftfahrzeug nach einem der vorhergehenden Ansprüche, bei welchem ein Relais (38) mit Umschaltkontakten (42; 121, 123) vorgesehen ist, welche im umgeschalteten Zustand, also bei aktiviertem Relais (38), eine Steuerung der zusätzlichen Signalleuchte (14) durch den Blinkleuchten (10, 12) zugeführte synchronisierte Warnblinksignale (18, 22) ermöglichen.

7. Kraftfahrzeug nach einem der vorhergehenden Ansprüche, bei welchem die Frequenz (f1) des anderen Steuersignals (76) von der Frequenz (f0) des Warnblinkgebers (G) verschieden ist.

8. Kraftfahrzeug nach Anspruch 7, bei welchem das andere Steuersignal (76) eine höhere Frequenz (f1) hat als die Frequenz (f0) des Warnblinkgebers (G).

9. Kraftfahrzeug nach einem der Ansprüche 2 bis 5, bei welchem mindestens eines der bei einem Warnblinkvorgang auftretenden Signale (18, 22) über eine Diode (56) einem kapazitiven Speicherglied (58, 60) zugeführt wird, und die Spannung an diesem Speicherglied als Betriebsspannung einem konjunktiven Glied (30; 30') zugeführt wird, welches bei konjunktiver Verknüpfung von Warnblinksignalen (18, 22) die zusätzliche Signalleuchte (14) direkt oder indirekt ansteuert.

## Claims

1. A vehicle comprising an additional signalling light (14), especially a higher level tail light,
comprising a device (70) for operating said additional signalling light (14) with the frequency of a warning flasher unit (G) when a warning flasher operation is enabled,
and comprising a higher priority device for switching this additional signalling light (14) to operate with a different control signal (76) when such a different control signal (76) is generated by a unit (78) provided therefor on the vehicle, said unit being activated automatically by the vehicle's exceding a predetermined deceleration value.

2. The vehicle according to claim 1, wherein the device (70) for activating the additional signalling light (14) is adapted for a conjunctive combination of warning flasher signals (18, 22) supplied to the flasher lights (10, 12) upon the occurrence of a warning flasher operation in order to control the additional signalling light (14) with a signal originating from this conjunctive combination.

3. The vehicle according to claim 2, wherein a NAND logic element (30') is provided for the conjunctive combination of warning flasher signals (18, 22), the signal at the output (30a) of the NAND logic element (30') serving to directly or indirectly control, via an inverter (112), the additional signalling light (14).

4. The vehicle according to claim 3, wherein a control signal from an integrating device (120, 122, 124) is adapted to be fed to the input (108) of the inverter (112), a special control signal (76) for the additional signalling light (14) being adapted to be fed to said integrating member in order to block control of the additional signalling light (14) via the inverter (112) when said special control signal (76) is present, and to enable direct control of the additional signalling light (14) by the special control signal (76).

5. The vehicle according to claim 4, wherein there is provided a relay (38) having switching-over contacts (42; 121, 123) enabling, in the currentless state, a control of the additional signalling light (14) by the special control signal (76).

6. The vehicle according to any preceding claim, wherein there is provided a relay (38) having switching-over contacts (42; 121, 123) enabling, in their switched-over state, i.e. when the relay (38) is activated, a control of the additional signalling light (14) by synchronized warning flasher signals (18, 22) supplied to the flasher lights (10, 12).

7. The vehicle according to any preceding claim, wherein the frequency (f1) of the other control signal (76) differs from the frequency (f0) of the warning flasher unit (G).

8. The vehicle according to claim 7, wherein the other control signal (76) has a frequency (f1) that is higher than the frequency (f0) of the warning flasher unit (G).

9. The vehicle according to any of claims 2 to 5, wherein at least one of the signals (18, 22) occurring during a warning flasher operation is supplied to a capacitive storage member (58, 60) via a diode (56), the voltage on said storage member being supplied, as an operating voltage, to a conjunctive logic element (30; 30') directly of indirectly-controlling the additional signalling light (14) during a conjunctive combination of warning flasher signals (18, 22).

## Revendications

1. Véhicule automobile comprenant un feu de signalisation supplémentaire (14), en particulier un feu arrière élevé,
comprenant également un dispositif (70) permettant d'activer ce feu de signalisation supplémentaire (14) avec la fréquence d'un clignoteur de détresse (G) lorsqu'une signalisation de détresse est enclenchée,
et comprenant aussi un dispositif prioritaire pour commuter ce feu de signalisation supplémentaire (14) sur un fonctionnement avec un autre signal de commande (76) lorsqu'un dispositif (78) prévu à cet effet sur le véhicule émet un tel autre signal de commande (76), ce dispositif (78) étant activé automatiquement lorsque le véhicule enregistre une décélération supérieure à une décélération prédeterminée.

2. Véhicule selon la revendication 1, dans lequel le dispositif (70) permettant d'activer le feu de signalisation supplémentaire (14) est agencé pour la combinaison conjonctive de signaux clignotants de détresse (18, 22), ces signaux de détresse (18, 22) étant envoyés aux clignotants (10, 12) en cas de déclenchement d'une signalisation de détresse afin de commander le feu de signalisation supplémentaire (14) avec un signal créé par cette combinaison conjonctive.

3. Véhicule selon la revendication 2, dans lequel un circuit NON-ET (30') est prévu pour la combinaison conjonctive de signaux clignotants de détresse (18, 22), le signal à la sortie (30a) de ce circuit contrôlant, directement ou indirectement, le feu de signalisation supplémentaire (14) par l'intermédiaire d'un circuit inverseur (112).

4. Véhicule selon la revendication 3, dans lequel un signal de commande provenant d'un circuit intégrateur (120, 122, 124) est envoyé à l'entrée (108) du circuit inverseur (112), un signal de commande particulier (76) pour le feu de signalisation supplémentaire (14) étant envoyé au circuit intégrateur afin de bloquer une commande du feu de signalisation supplémentaire (14) par le circuit inverseur (112) lorsque ce signal de commande particulier (76) est présent afin de permettre une commande directe du feu de signalisation supplémentaire (14) par le signal de commande particulier (76).

5. Véhicule selon la revendication 4, dans lequel est prévu un relais (38) avec des contacts à permutation (42; 121, 123) permettant, dans l'état hors tension, de commander le feu de signalisation supplémentaire (14) par le signal de commande particulier (76).

6. Véhicule selon l'une des revendications précédentes, dans lequel est prévu un relais (38) avec des contacts à permutation (42; 121, 123) qui permettent de commander, dans leur état permuté, donc lorsque le relais (38) est activé, le feu de signalisation supplémentaire (14) par les signaux clignotants de détresse synchronisés (18, 22) envoyés aux clignotants.

7. Véhicule selon l'une des revendications précédentes, dans lequel la fréquence (f1) de l'autre signal de commande (76) est différente de la fréquence (f0) du clignoteur de détresse (G).

8. Véhicule selon la revendication 7, dans lequel l'autre signal de commande (76) présente une fréquence supérieure (f1) à la fréquence (f0) du clignoteur de détresse (G).

9. Véhicule selon l'une des revendications 2 à 5, dans lequel au moins l'un des signaux (18, 22) émis en cas de signalisation de détresse est envoyé à un organe de mémoire capacitif (58, 60) par une diode (56), la tension sur cet organe de mémoire étant envoyée, comme tension de service, à un circuit conjonctif (30; 30') qui commande le feu de signalisation supplémentaire (14), directement ou indirectement, en cas de combinaison conjonctive de signaux de détresse (18, 22).
